(19) Europäisches Patentamt
European Patent Office
Office européen des brevets

(11) EP 1 858 931 B1

(12) **EUROPEAN PATENT SPECIFICATION**

(45) Date of publication and mention of the grant of the patent:
**10.09.2014 Bulletin 2014/37**

(21) Application number: **06720060.0**

(22) Date of filing: **01.02.2006**

(51) Int Cl.:
***C08F 8/00*** (2006.01) ***C08F 230/08*** (2006.01)

(86) International application number:
**PCT/US2006/003525**

(87) International publication number:
**WO 2006/086189 (17.08.2006 Gazette 2006/33)**

(54) **METHOD OF PREVENTING OR REDUCING ALUMINOSILICATE SCALE IN INDUSTRIAL PROCESSES**

VERFAHREN ZUR VERHINDERUNG ODER VERMINDERUNG VON ALUMINIUMSILIKATABLAGERUNGEN IN INDUSTRIELLEN VERFAHREN

PROCEDE VISANT A EMPECHER OU REDUIRE LES DEPOTS D' ALUMINOSILICATE LORS DE PROCEDES INDUSTRIELS

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.02.2005 US 651347 P**
**04.08.2005 US 197236**
**04.08.2005 US 197237**

(43) Date of publication of application:
**28.11.2007 Bulletin 2007/48**

(60) Divisional application:
**11170425.0 / 2 386 578**

(73) Proprietor: **CYTEC TECHNOLOGY CORP.**
**Wilmington, Delaware 19801 (US)**

(72) Inventors:
- **TAYLOR, Matthew, L.**
**New York, New York 10016 (US)**
- **CHEN, Haunn-lin, Tony**
**Darien, Connecticut 06820 (US)**
- **SPITZER, Donald, P.**
**Stamford, Connecticut 06906 (US)**
- **HEITNER, Howard, I.**
**Tuckahoe, New York 10707 (US)**

(74) Representative: **Deckers, Hellmuth Alexander et al**
**European Patent Attorney**
**Breitbachstrasse 15**
**55218 Ingelheim am Rhein (DE)**

(56) References cited:
**EP-A- 1 630 182** **WO-A-2004/009606**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Summary of the Invention

The invention describes materials and methods for preventing or inhibiting the formation of scale on or in equipment used in industrial processes having alkaline process streams.

### Background of the Invention

The problem of scaling in and on process equipment used in industrial processes and particularly in those having an alkaline process stream is very well known. The scales present a significant problem when they build up on the surface of process equipment and cause a loss in the heat transfer coefficient. Thus, additional heat may be required to be provided to the evaporator equipment in these processes resulting in added cost.

A an example of such an industrial process having an alkaline process stream is the Kraft recovery process for manufacturing paper which has been known for over 100 years and is eloquently described in many texts on the subject (see G.A. Smook "Handbook for Pulp and paper technologists, 3rd Edition). More recently the development of closed loop cycles in kraft paper mills has resulted in an increase in scaling problems in process equipment due to the build up of aluminum and silicon in the system as is described by P.N. Wannamaker and W.J. Frederick in "Application of solubility data to predicting the accumulation of aluminum and silicon in alkaline pulp mills", Minimum Effluent Mills Symposium, 1996, p303. It has, therefore, been a well recognized need to provide a method and compositions for inhibiting the formation of aluminosilicate scales in kraft pulp mills. US 5409571 describes the use of terpolymers of maleic acid, acrylic acid and hypophosphorous acid as scale inhibitor for kraft pulp mills. This type of polymer is shown to be effective against calcium carbonate scales but has not been shown to be effective for aluminosilicate scales.

High Level Nuclear Waste (HLNW) facilities process radioactive-rich solid and liquid wastes in order to minimize waste volume and immobilize the hazardous material for long term storage. HLNW treatment is currently performed via two processes; one process is performed under acidic conditions and one under alkaline conditions. Under alkaline processing conditions, sodium aluminosilicate scale growth is a significant problem during the pretreatment stage, prior to waste vitrification.

Within the pretreatment facility, the waste is evaporated, filtered, ion exchanged and further evaporated. During evaporation, aluminosilicate scales can form on the surfaces of the evaporator walls and heating surfaces. Furthermore, transfer pipes can also become blocked due to the buildup of these scales and precipitates necessitating closure for maintenance.

The pretreated HLNW wastes go vitrification facilities. HLNW waste goes into a melter preparation vessel where silica and other glass-forming materials are added. The mixture is then heated and the molten mixture is then poured into large stainless steel containers, cooled and moved into temporary storage until a permanent storage location is selected.

From the vitrification unit operation, a portion of the Si-containing glass-forming materials are recycled back into the evaporator unit (during pretreatment). The dissolved aluminum, in the form of sodium aluminate, and sodium silicate, species react slowly in solution to form complex hydrated sodium aluminosilicate species. Among these species are families of amorphous aluminosilicates (aluminosilicate hydrogel), zeolites, sodalites, and cancrinites collectively known as "sodium aluminosilicate". These nuclear waste streams also contain high concentrations (up to 2M for each ion) of nitrate and nitrite ions, and very high concentrations (up to 16M in some sections of the tank) of $OH^-$ ions. These factors greatly enhance the rate of formation of aluminosilicate scale. As a result, sodium aluminosilicate scale formed has a low solubility in the alkaline HLNW liquor.

Also, sodium aluminosilicate scale is considered to be an undesirable HLNW product due to the incorporation of radioactive lanthanides and actinides into the aluminosilicate scale cage structures and coprecipitation of sodium diuranate. (Peterson, R. A. and Pierce, R. A., (2000), Sodium diuranate and sodium aluminosilicate precipitation testing results, WSRC-TR-2000-00156,. Westinghouse Savannah River Company, Aiken, SC.). It is therefore, desirable for HLNW facilities to minimize the volume of HLNW's including those resulting from aluminosilicate scales. Thus, it can be seen that, sodium aluminosilicate scale growth has a significant negative economic and operational impact on the treatment of nuclear wastes.

Therefore, it would be desirable to provide a solution to the sodium aluminosilicate scaling problem in the nuclear waste evaporators.

Attempts to solve the aforementioned problems have lead to limited success see Wilmarth and coworkers (Wilmarth, W. R., Mills, J. T. and Dukes, V. H., (2005), Removal of silicon from high-level waste streams via ferric flocculation, Separation Sci. Technol., 40, 1-11. These authors have examined the use of ferric nitrate to remove Si from solution in the form of a ferric precipitate, in order to reduce or eliminate the formation of aluminosilicate scale. Although this approach has some merit, there is still the disposal of the high-level ferric precipitate to deal with and an additional

filtration unit operation is required. Also, W. R.Wilmarth and J. T. Mills "Results of Aluminosilicate Inhibitor Testing", WSRC-TR-2001-00230 have proposed using low molecular weight compounds as scale inhibitors for HLNW's but have found none to be satisfactory.

Thus there is a need for an economical and effective method for reducing aluminosilicate scale buildup on equipment used in industrial processes where such buildup is a problem as for example, the Kraft pulp paper process and in nuclear waste treatment streams.

## SUMMARY OF THE INVENTION

The present invention solves the aforementioned problems and others by providing a composition according to claim 1 to reduce or eliminate aluminosilicate scaling in a process having an alkaline process stream such as a kraft pulping mill or a high level nuclear waste evaporation process treatment stream. When compositions according to claim 1 of the present invention are added to these industrial process streams, they reduce and even completely prevent formation of aluminosilicate scale on the equipment surfaces. Moreover, the present materials are effective at treatment concentrations that make them economically practical.

## DETAILED DESCRIPTION OF THE INVENTION

The present invention is directed to a method and materials for the reduction of aluminosilicate containing scale in an industrial process having an alkaline process stream such as in the kraft pulp mill process streams or a high level nuclear waste treatment stream. The process stream to be treated can be any process stream having an alkaline condition and in which scaling occurs, e.g. black, green and white liquors of the kraft process or a high level nuclear waste evaporation process stream.

The method comprises the step of adding to the process stream an aluminosilicate containing scale inhibiting amount of a polymer selected from polymers according to the formulae:

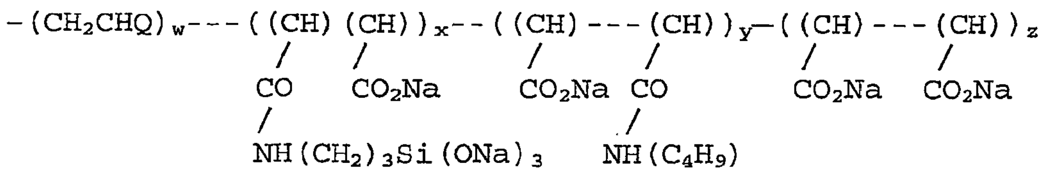

where w =1-99.9%, x=0.1-50%, y=0-50%, z=0-50%; and
Q is phenyl, and:

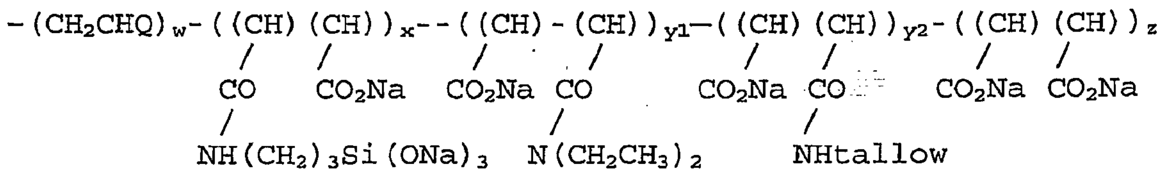

where w =1-99.9%, x=0.1-50%, y1+Y2 =0-50%, y1 and y2 = 0-50% z=0-50%; and Q is phenyl.

The polymers used in the invention can be made in a variety of ways. For example, they can be made by polymerizing a monomer containing the group --Si(OR")$_3$, where R" = C1-C3 alkyl, Na, such as for example a silane monomer, or copolymerizing such a monomer with one or more co-monomers. Suitable silane monomers for use in the present invention include reaction products of maleic anhydride with amino compounds containing the --Si(OR")$_3$ group. These monomers can be hydrolyzed by aqueous base, either before or after polymerization. Suitable co-monomers for use in the present invention include styrene.

These polymers can be made in a variety of solvents. Solvents suitable for such use include, but are not limited to, acetone, tetrahydrofuran, toluene, xylene, etc. In some cases the polymer is soluble in the reaction solvent and is recovered by stripping off the solvent. Alternatively, if the polymer is not soluble in the reaction solvent, the product is recovered by filtration. Suitable initiators for use in the present invention include, but are not limited to, 2,2'azobis(2,4-dimethylvaleronitrile) and 2,2-azobisisobutyronitrile, benzoyl peroxide, and cumene hydroperoxide.

Polymers containing anhydride groups can be reacted with a variety of compounds containing -Si(OR")$_3$ to make polymers suitable for use in the present invention. Suitable anhydride containing polymers include copolymers of maleic anhydride with styrene.

In the present process, the amount of polymer added to the process stream can depend on the composition of the industrial process stream (e.g. a Kraft pulping mill process or high level nuclear waste streams liquor involved and generally all that is required is an aluminosilicate containing scale inhibiting amount thereof. In general the polymer is preferably added to the process stream in economically and practically favorable concentrations. A preferred concentration is one that is greater than about 0 ppm to about 300 ppm, more preferably in a concentration that is greater than about 0 ppm to about 50 ppm and most preferably the polymer is added to the process stream in a concentration that is greater than about 0 ppm to about 10 ppm.

The polymer can be added directly to any industrial process stream where scaling can occur, e.g. in the black liquor evaporators of the kraft pulp milling process, and in green and white liquor process streams of that process. It is preferred, however to add the polymer to a charge stream or recycle stream or liquor leading to the black liquor evaporator. While the polymer can be added to the industrial process stream at any time during the process, it is preferable to add it at any convenient point in the process before or during application of heat. Usually, the polymer is added immediately before the evaporator.

Examples

High Level Nuclear Waste

Comparative Example A

Preparation of the reaction product of styrene/maleic anhydride copolymer with butylamine (Comparative Polymer A) is as follows: 10.0 g of dry styrene/maleic anhydride copolymer (SMA), with a mole ratio of styrene to maleic anhydride of about 1.1 and $M_w$ about 16,000, is suspended in 100 ml of toluene. A solution of 1.72 g of butylamine in 10 ml of toluene is added at ambient temperature. The mixture is refluxed for 3 hr. The solid product is filtered off, washed, and dried. This gives a polymer containing 53 mole% styrene, 24 mole% N-butyl half amide from maleic anhydride, and 23 mole% maleic anhydride.

Comparative Example B

Preparation of the reaction product of SMA with tallow amine and diethylamine (Comparative Polymer B) is as follows: 100.0 g of dry SMA, with a mole ratio of styrene to maleic anhydride of about 1.1 and $M_w$ about 16,000, is suspended in 941.7 g of toluene. A solution of 25.2 g tallow amine and 27.5 g diethylamine in 35.2 g toluene is added at ambient temperature and the mixture is then refluxed for 30 min. The resulting toluene slurry is cooled to room temperature and then added with mixing to about 700 ml of 2% aqueous caustic. The toluene layer is separated and the residual toluene in the aqueous phase is removed by distillation. The aqueous solution is further purified by ultrafiltration using a 0.2 $\mu$m hydrophilic polyethersulfone filter and then freeze dried to obtain the dry polymer. This gives a polymer containing 53 mole% styrene, 38 mole% N-diethyl half amide from maleic anhydride, and 9 mole% N-tallow half amide from maleic anhydride.

Comparative Example C

Preparation of a copolymer of N-tert-octylacrylamide and acrylic acid (Comparative Polymer C) is as follows: 2.81 g Acrylic acid, 2.52 g N-tert-octylacrylamide, and 0.14 g 2-mercaptoethanol are dissolved in 12.5 g DMF and 13.87 g dioxane and purged with nitrogen. The mixture is heated to 75° C and 0.16 g 2,2'-azobis(2,4-dimethylvaleronitrile) in 3 g dioxane is added. After 6 hr at 75° C, the mixture is cooled, giving the desired polymer in solution. This gives a polymer containing 73.7 mole% acrylic acid and 26.3 mole% N-tert-octylacrylamide.

Example 1 - Polymer i

Preparation of the reaction product of SMA with butylamine and (3-aminopropyl)triethoxysilane to give a polymer with 1 mole% silane containing monomer units (Polymer i) is as follows: 10.0 g of dry SMA, with a mole ratio of styrene to maleic anhydride of about 1.0 and $M_w$ about 16,000, is suspended in 100 ml of toluene. A solution of 1.72 g of butylamine and 0.21 g of (3-aminopropyl)triethoxysilane in 10 ml of toluene is added at ambient temperature. The mixture is refluxed for 3 hr. The solid product is filtered off, washed, and dried. This gives a polymer containing 53 mole% styrene, 23.9 mole% N-butyl half amide from maleic anhydride, 1 mole% N-(3-triethoxysilyl)propyl half amide from maleic anhydride, and 22.1 mole% maleic anhydride.

Example 2 - Polymer ii

Preparation of the reaction product of SMA with butylamine and (3-aminopropyl)triethoxysilane to give a polymer with 3.8 mole% silane containing monomer units (Polymer ii) is as follows: 10.0 g of dry SMA, with a mole ratio of styrene to maleic anhydride of about 1.1 and $M_w$ about 16,000, is suspended in 100 ml of toluene. A solution of 1.72 g of butylamine and 0.83 g of (3-aminopropyl)triethoxysilane in 10 ml of toluene is added at ambient temperature. The mixture is refluxed for 3 hr. The solid product is filtered off, washed, and dried. This gives a polymer containing 53 mole% styrene, 23.9 mole% N-butyl half amide from maleic anhydride, 3.8 mole% N-(3-triethoxysilyl)propyl half amide from maleic anhydride, and 19.3 mole% maleic anhydride.

Example 3 - Polymer iii

Preparation of the reaction product of SMA with butylamine and (3-aminopropyl)triethoxysilane to give a polymer with 7.6 mole% silane containing monomer units (Polymer iii) is as follows: 10.0 g of dry SMA, with a mole ratio of styrene to maleic anhydride of about 1.1 and $M_w$ about 16,000, is suspended in 100 ml of toluene. A solution of 1.72 g of butylamine and 1.66 g of (3-aminopropyl)triethoxysilane in 10 ml of toluene is added at ambient temperature. The mixture is refluxed for 3 hr. The solid product is filtered off, washed, and dried. This gives a polymer containing 53 mole% styrene, 23.9 mole% N-butyl half amide from maleic anhydride, 7.6 mole% N-(3-triethoxysilyl)propyl half amide from maleic anhydride, and 15.5 mole% maleic anhydride.

Example 4 - Polymer iv

Preparation of the reaction product of SMA with tallow amine, diethylamine, and (3-aminopropyl)triethoxysilane to give a polymer with 3.8 mole% silane containing monomer units (Polymer iv) is as follows: 100.0 g of dry SMA, with a mole ratio of styrene to maleic anhydride of about 1.1 and $M_w$ about 16,000, is suspended in 941.7 g of toluene. A solution of 25.2 g tallow amine, 24.8 g diethylamine, and 8.3 g (3-aminopropyl)triethoxysilane in 38.9 g toluene is. added at ambient temperature and the mixture is then refluxed for 30 min. The resulting toluene slurry is cooled to room temperature and then added with mixing to about 700 ml of 2% aqueous caustic. The toluene layer is separated and the residual toluene in the aqueous phase is removed by distillation. The aqueous solution is further purified by ultrafiltration using a 0.2 μm hydrophilic polyethersulfone filter and then freeze dried to obtain the dry polymer. This gives a polymer containing 53 mole% styrene, 3.8 mole% N-(3-triethoxysilyl)propyl half amide from maleic anhydride, 9.4 mole% N-tallow half-amide of maleic anhydride, and 33.8 mole% N,N-diethyl half amide of maleic anhydride.

Example 5 - Polymer

Preparation of the reaction product of SMA with tallow amine, diethylamine, and (3-aminopropyl)triethoxysilane to give a polymer with 7.5 mole% silane containing monomer units (Polymer v) is as follows: 100.0 g of dry SMA, with a mole ratio of styrene to maleic anhydride of about 1.1 and $M_w$ about 16,000, is suspended in 941.7 g of toluene. A solution of 20.2 g tallow amine, 23.4 g diethylamine, and 16.7 g (3-aminopropyl)triethoxysilane in 40.2 g toluene is added at ambient temperature and the mixture is then refluxed for 30 min. The resulting toluene slurry is cooled to room temperature and then added with mixing to about 700 ml of 2% aqueous caustic. The toluene layer is separated and the residual toluene in the aqueous phase is removed by distillation. The aqueous solution is further purified by ultrafiltration using a 0.2 μm hydrophilic polyethersulfone filter and then freeze dried to obtain the dry polymer. This gives a polymer containing 53 mole% styrene, 7.5 mole% N-(3-triethoxysilyl)propyl half amide from maleic anhydride, 7.5 mole% N-tallow half amide of maleic anhydride, and 30 mole% N,N-diethyl half amide of maleic anhydride.

Example 6 - Polymer vi

Preparation of the reaction product of SMA with tallow amine, diethylamine, and (3-aminopropyl)triethoxysilane to give a polymer with 3.8 mole% silane containing monomer units (Polymer vi) is as follows: 100.0 g of dry SMA, with a mole ratio of styrene to maleic anhydride of about 1.1 and $M_w$ about 16,000, is suspended in 941.7 g of toluene. A solution of 10.1 g tallow amine, 28.9 g diethylamine, and 8.3, g (3-aminopropyl)triethoxysilane in 31.3 g toluene is added at ambient temperature and the mixture is then refluxed for 30 min. The resulting toluene slurry is cooled to room temperature and then added with mixing to about 700 ml of 2% aqueous caustic. The toluene layer is separated and the residual toluene in the aqueous phase is removed by distillation. The aqueous solution is further purified by ultrafiltration using a 0.2 μm hydrophilic polyethersulfone filter and then freeze dried to obtain the dry polymer. This gives a polymer containing 53 mole% styrene, 3.8 mole% N-(3-triethoxysilyl)propyl half amide from maleic anhydride, 3.8 mole% N-tallow half amide of maleic anhydride, and 39.4 mole% N,N-diethyl half amide of maleic anhydride.

Table 1 Summary of Polymers Used in Scale Inhibition Testing

| Example | Polymer | Composition | Mole% Silane* |
|---|---|---|---|
| Comparative A | Comparative A | Reaction product of SMA with butylamine | 0 |
| Comparative B | Comparative B | Reaction product of SMA with tallow amine and diethylamine | 0 |
| Comparative C | Comparative C | Copolymer of N-tert-octylamide and acrylic acid | 0 |
| | Comparative D | Polyethylenimine ($M_w$ ~25, 000) obtained from Aldrich | 0 |
| | Comparative E | Polyvinylpyrrolidone ($M_w$ ~10,000) from Aldrich | 0 |
| 1 | i | Reaction product of SMA with butylamine and (3-aminopropyl)triethoxysilane | 1 |
| 2 | ii | reaction product of SMA with butylamine and (3-aminopropyl)triethoxysilane | 3.8 |
| 3 | iii | reaction product of SMA with butylamine and (3-aminopropyl)triethoxysilane | 7.6 |
| 4 | iv | Reaction product of SMA with tallow amine, diethylamine, and (3-aminopropyl)triethoxysilane | 3.8 |
| 5 | v | reaction product of SMA with tallow amine, diethylamine, and (3-aminopropyl)triethoxysilane | 7.5 |
| 6 | vi | reaction product of SMA with tallow amine, diethylamine, and (3-aminopropyl)triethoxysilane | 3.8 |
| *Mole% of monomer units in the polymer containing the silane functional group. | | | |

Example 7

Test Procedure

A synthetic high level nuclear waste liquor is made by adding sodium carbonate, sodium sulfate, sodium hydroxide, sodium aluminate solution (made by digesting alumina trihydrate in caustic), sodium silicate, sodium nitrate, and sodium nitrite to deionized water. The final composition of the liquor is shown in Table 2

Table 2

| Species | Concentration (mole/l) |
|---|---|
| NaOH | 4.5 |
| $NaNO_3$ | 1.0 |
| $NaNO_2$ | 1.0 |
| $Na_2CO_3$ | 0.25 |
| $Na_2SO_4$ | 0.25 |
| Alumina Trihydrate | 0.5 |
| $SiO_2$ | 0.01 |

All of the polymer samples are dissolved in 2% aqueous NaOH prior to addition to the nuclear waste liquor,

hydrolyzing any anhydride and trialkoxylsilane groups that have not previously been reacted, transforming the trialkoxylsilane groups into silanol groups or the sodium salts. Into a 125 ml polyethylene bottle, are placed the scale reducing additive (if used) as a 0.5% solution in 2% aqueous NaOH for the lower doses and for the higher doses a 3% solution is used. 120 ml of the above stock synthetic high level nuclear waste solution is then added to the bottle with mixing. The sealed bottle is heated with agitation at 102° C for 18±2 hours. Up to 24 such tests (bottles) are done at one time. At the end of the 18 hours, the bottles are opened and the solution is filtered (0.45 μm filter). Considerable aluminosilicate scale is observed to form as loose aluminosilicate in the liquor (which may have initially formed on the polyethylene surfaces). In the examples below, the weight of scale formed in the test is expressed as a percentage of the average weight of scale that formed on two comparative blank tests (i.e. no additive used) that are part of the same set of tests.

Using the test procedure outlined above, a series of SMA type polymers reacted with butylamine and containing varying amounts of silane are examined for aluminosilicate scale inhibition activity and the results are reported in Table 3.

Table 3

| Polymer | Mole% Silane | Dosage, mg/l | Total Scale Formed, % vs. Blank |
|---|---|---|---|
| Comparative A | 0 | 10 | 104.4 |
| Comparative A | 0 | 50 | 103.9 |
| i | 1 | 10 | 69.4 |
| i | 1 | 50 | 72.6 |
| ii | 3.8 | 10 | 63.3 |
| ii | 3.8 | 50 | 37.1 |
| iii | 7.6 | 10 | 5.2 |
| iii | 7.6 | 50 | 1.0 |

Example 8

Using the test procedure as outlined in Example 7, a series of SMA polymers reacted with tallow amine and diethylamine and containing varying amounts of silane are examined for scale inhibition activity and the results are reported in Table 4.

Table 4

| Polymer | Mole% Silane | Dosage, mg/l | Total Scale Formed, % vs. Blank |
|---|---|---|---|
| Comparative B | 0 | 10 | 87.4 |
| Comparative B | 0 | 50 | 95.8 |
| iv | 3.8 | 10 | 59.2 |
| iv | 3.8 | 50 | 54.9 |
| v | 7.5 | 10 | 2.8 |
| v | 7.5 | 50 | 0 |
| vi | 3.8 | 10 | 49.6 |
| vi | 3.8 | 50 | 66.8 |

<u>Kraft pulp mill scale inhibition testing</u>

Example 9

In order to simulate the conditions found in a typical kraft pulp mill black liquor a synthetic process liquor simulating a typical black liquor is prepared in the following way.

A basic aluminate solution is prepared according to the recipe below by adding the aluminate and NaOH solution to the water and stirring overnight. The solution is then filtered through a 3-μm filter membrane (Pall Versapor-3000 T w/wa, 47 mm) :

| | |
|---|---|
| $Na_2O.Al_2O_3.3\ H_2O$ | 100.0 g |
| 50% NaOH | 146.6 g |
| Deionized water | 753.4 g |
| Total | 1000.0 g |

This basic aluminate solution is used to prepare a simulated kraft black liquor solution according to the recipe and procedure below. Sodium acetate is added to achieve the desired sodium ion concentration. Amounts are in grams and percentages are w/w unless otherwise indicated.

| | |
|---|---|
| Sodium carbonate | 121.9 |
| Sodium sulfate | 32.7 |
| Sodium thiosulfate | 36.4 |
| Sodium hydrosulfide, 60% | 70.9 |
| Sodium acetate | 445.3 |
| 50% sodium hydroxide | 290.7 |
| 29.55% $SiO_2$ | 14.0 |
| Basic aluminate solution | 25.1 |
| Deionized water | 1746 |
| Total | 2783 g = 2.30 liter |

Calculated concentration:

$[CO_3^{2-}]$ = 0.5 M
$[SO_4^{2-}]$ = 0.1 M
$[S_2O_3^{2-}]$ = 0.1 M
$[SH^-]$ = 0.33 M
$[Na^+]$ = 5.7 M
$[OH^-]$ = 1.6 M
[Si] = 0.03 M
[Al] = 0.01 M

The solution is prepared by adding the sodium carbonate, sodium-sulfate, sodium thiosulfate, sodium hydrosulfide, and sodium acetate to the water with rapid stirring. After 30 min stirring, the solution is filtered through a coarse glass frit to remove minor amounts of insoluble material. The sodium hydroxide solution, silica solution, and finally basic aluminate solution is added, with stirring after each addition. The solution is used immediately as described below.

For each of Examples 10 to 11, respective polymer solutions of polymers iii (Example 3), v (Example 5) are pre-diluted to 1% (w/w) active concentration in 2% NaOH solution prior to use.

The amount of 1.45 g of a polymer solution, (or 1.45 g of water for the control test), is added to a labeled 4-oz HDPE wide-mouth jar. Then 145 g (120 ml) of simulated kraft black liquor solution is added to each jar before capping and shaking. Each jar then contained a "test solution". The polymer dose is 100 ppm.

The caps on the jars are then loosened so as to be able to relieve pressure, and the jars placed on the floor of a 102 °C oven to simulate heating in a kraft process liquor. After 1.5 hr the caps are tightened and the jars placed on a rotisserie placed inside the oven. After turning on the rotisserie in the oven overnight (16.5 hr), each sample is filtered using a pre-weighed 3-μm filter membrane (Pall Versapor-3000 T w/wa, 47 mm). Each membrane plus any collected solid is washed with about 5-ml water and placed on a 2.5-inch diameter watch glass. A steel tray containing all the watch glasses and membranes is placed in a 102 °C oven for 30 min to dry the filtered solids. Each membrane plus solid is weighed and the weight of the solid calculated by difference. % Scale inhibition is then calculated in the following manner:

$$\%\ \text{Scale inhibition} = 100 \times \frac{\text{Weight of scale formed with polymer present}}{\text{Weight of scale formed with polymer absent}}$$

The results of testing polymers in examples 10 to 11 at 100 ppm are shown in Table 9.

Table 9.

| Example | Polymer | % Scale Reduction |
|---|---|---|
| 10 | iii | 10.3 |
| 11 | v | 27.5 |

## Claims

1. A composition for use in reducing aluminosilicate scale in an alkaline industrial process comprising a polymer selected from the formula

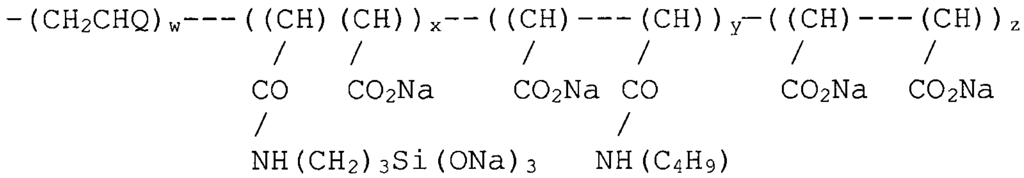

where w =1-99.9%, x=0.1-50%, y=0-50%, z=0-50%; and Q is phenyl, and the formula

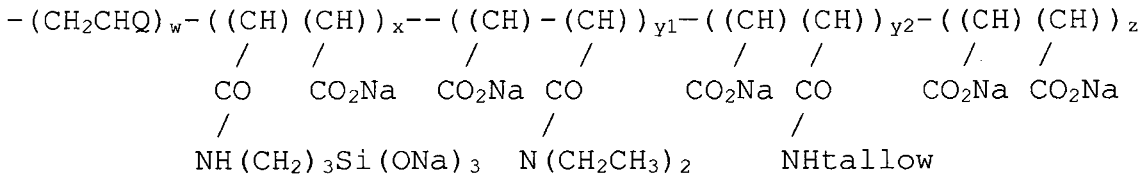

where w =1-99.9%, x=0.1-50%, y1+Y2 =0-50%, y1 and y2 = 0-50% z=0-50%; and Q is phenyl.

## Patentansprüche

1. Zusammensetzung zur Verwendung zur Verminderung von Aluminiumsilikatablagerungen in einem alkalischen industriellen Verfahren, umfassend ein Polymer
ausgewählt aus der Formel

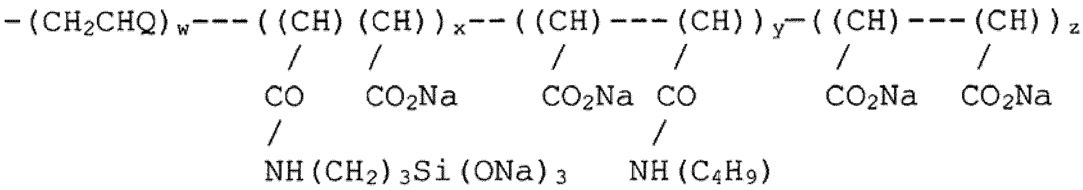

wobei w = 1 % bis 99,9 %; x = 0,1 % bis 50 %; y = 0 % bis 50 %; z = 0 % bis 50 % und Q Phenyl ist,
und der Formel

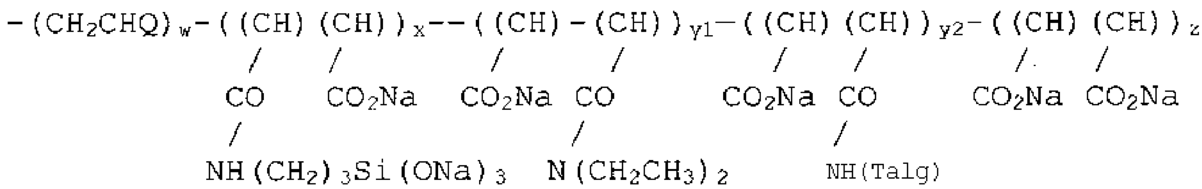

wobei w = 1 % bis 99,9 %; x = 0,1 % bis 50 %; y1+y2 = 0 % bis 50 %; y1 und y2 = 0 % bis 50 %; z = 0 % bis 50 % und Q Phenyl ist.

## Revendications

1. Composition pour une utilisation dans la réduction du tartre d'aluminosilicate dans un procédé alcalin industriel contenant un polymère choisi à partir de la formule

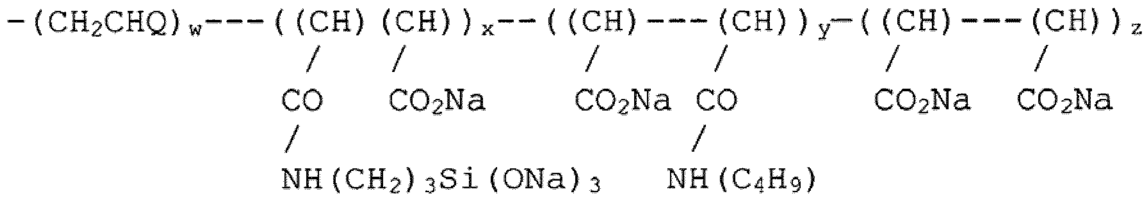

dans laquelle w=1% à 99,9%, x=0,1 % à 50%, y = 0% à 50%, z =0% à 50%; et Q= est le phényle, et la formule

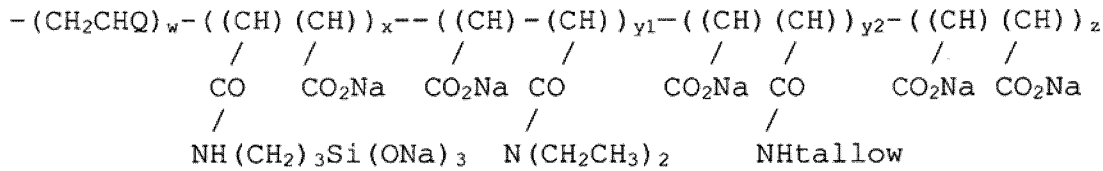

dans laquelle w = 1 % à 99,9 %, x = 0,1 % à 50 %, y1 + y2 = 0 % à 50 %, y1 et y2 = 0 % à 50 %, z = 0 % à 50 % ; et Q est le phényle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5409571 A


### Non-patent literature cited in the description


- **G.A. SMOOK.** Handbook for Pulp and paper technologists
- **P.N. WANNAMAKER ; W.J. FREDERICK.** Application of solubility data to predicting the accumulation of aluminum and silicon in alkaline pulp mills. *Minimum Effluent Mills Symposium,* 1996, 303
- **PETERSON, R. A. ; PIERCE, R. A.** Sodium diuranate and sodium aluminosilicate precipitation testing results, WSRC-TR-2000-00156. Westinghouse Savannah River Company, 2000
- **WILMARTH, W. R. ; MILLS, J. T. ; DUKES, V. H.** Removal of silicon from high-level waste streams via ferric flocculation. *Separation Sci. Technol.,* 2005, vol. 40, 1-11
- **W. R.WILMARTH ; J. T. MILLS.** Results of Aluminosilicate Inhibitor Testing. *WSRC-TR-2001-00230*